# EUROPEAN PATENT APPLICATION

(11) **EP 4 744 978 A1**
(43) Date of publication of application: **20.05.2026**
(21) Application number: 24853155.0
(22) Date of filing: 29.02.2024
(51) Int. Cl.: B60S 5/06, B60L 53/80

(54) **BATTERY SWAPPING PLATFORM, BATTERY SWAPPING STATION, BATTERY SWAPPING SYSTEM AND BATTERY SWAPPING METHOD**

(30) Priority: 16.08.2023 CN 202311032754
(71) Applicant: Contemporary Amperex Technology Co., Limited, Ningde, Fujian 352100 (CN)
(72) Inventor: WU, Kai, Ningde, Fujian 352100 (CN); CHAN, Libing, Ningde, Fujian 352100 (CN)
(74) Representative: Kraus & Lederer PartGmbB
(86) International application number: PCT/CN2024/079311
(87) International publication number: WO 2025/035739

(57) **Abstract**

A battery swapping platform, a battery swapping station, a battery swapping system and a battery swapping method. The battery swapping platform (200) is provided with a position adjusting apparatus (300) and a battery swapping area (400), wherein the position adjusting apparatus comprises a position adjusting mechanism (310), which position adjusting mechanism is arranged to be movable in a first direction relative to the battery swapping area. The present application is compatible with a variety of different vehicle types, which is conducive to the development and promotion of battery swapping stations.

## Description

### CROSS-REFERENCE TO RELATED APPLICATIONS

The present application claims priority to Patent Application No. 202311032754.0, filed on August 16, 2023 and entitled "Battery Swapping Platform, Battery Swapping Station, Battery Swapping System, and Battery Swapping Method", which is incorporated herein by reference in its entirety.

### TECHNICAL FIELD

Embodiments of the present application relate to the technical field of battery swapping, and more particularly, to a battery swapping platform, a battery swapping station, a battery swapping system, and a battery swapping method.

### BACKGROUND

Energy conservation and emission reduction are key to sustainable development of the automotive industry. In this case, electric vehicles have become an important component of the sustainable development of the automotive industry due to advantages thereof in energy efficiency and environmental protection. For electric vehicles, battery swapping is an important manner of replenishing electrical energy, enabling rapid energy supply for electric vehicles with insufficient energy.

Before swapping a battery of a vehicle, it is necessary to first park the vehicle on a battery swapping platform of a battery swapping station and use a position adjusting apparatus on the battery swapping platform to position the vehicle. However, an existing position adjusting apparatus is only applicable to a single vehicle type, making it difficult to implement compatibility with a plurality of vehicle types. Therefore, how to provide a battery swapping platform to be compatible with different vehicle types is a technical problem that urgently requires resolution.

### SUMMARY

The present application provides a battery swapping platform, a battery swapping station, a battery swapping system, and a battery swapping method, which can be compatible with different vehicle types, thereby facilitating development and promotion of battery swapping stations.

According to a first aspect, a battery swapping platform is provided. The battery swapping platform is provided with a position adjusting apparatus and a battery swapping area. The position adjusting apparatus comprises a position adjusting mechanism and the position adjusting mechanism is arranged to be movable in a first direction relative to the battery swapping area.

This embodiment of the present application provides a battery swapping platform. The battery swapping platform is provided with a position adjusting apparatus and a battery swapping area. The battery swapping area can provide space for a vehicle to perform a battery swapping operation in the area. The position adjusting apparatus comprises a position adjusting mechanism, and the position adjusting mechanism is arranged to be movable in a first direction relative to the battery swapping area. In this way, by adjusting the position of the position adjusting mechanism in the first direction, there may be different distances between the position adjusting mechanism and the battery swapping area, so that the battery swapping platform can be applicable to vehicles with different wheelbases or vehicle lengths, thereby enabling compatibility with more vehicle types. Therefore, the battery swapping platform in this embodiment of the present application can be compatible with different vehicle types, which is conducive to the development and promotion of battery swapping stations.

In a possible implementation, the position adjusting apparatus comprises a moving mechanism, and the moving mechanism is connected to the position adjusting mechanism and configured to move the position adjusting mechanism to a target position in the first direction.

In the foregoing technical solution, the moving mechanism can drive the position adjusting mechanism to move in the first direction, so that the position adjusting mechanism can move to the target position. After the position adjusting mechanism moves to the target position, the vehicle can enter the battery swapping platform, and then the vehicle is parked in the position adjusting mechanism. Through arrangement of the moving mechanism, movement of the position adjusting mechanism in the first direction is implemented.

In a possible implementation, the moving mechanism comprises a connecting assembly and a push rod assembly, wherein a first end of the connecting assembly is connected to the position adjusting mechanism, and a second end of the connecting assembly is connected to the push rod assembly; and the push rod assembly is arranged to be capable of extending out in the first direction to lift the connecting assembly, so that the position adjusting mechanism is raised in a second direction.

In the foregoing technical solution, two ends of the connecting assembly are respectively connected to the position adjusting mechanism and the push rod assembly, and the push rod assembly lifts the connecting assembly after extending out in the first direction. In this way, the connecting assembly can drive the position adjusting mechanism to be raised. After the position adjusting mechanism is raised, it is convenient for the moving mechanism to drive the position adjusting mechanism to move in the first direction, and the influence of sundries on the battery swapping platform on the movement of the position adjusting mechanism can be reduced.

In a possible implementation, the push rod assembly comprises a push portion and a rod portion, wherein the push portion is configured to drive the rod portion to extend or retract in the first direction; and the rod portion is connected to the push portion, and the rod portion is arranged to be capable of extending out in the first direction under the driving of the push portion to lift the connecting assembly.

In the foregoing technical solution, the push portion is connected to the rod portion, the push portion can drive the rod portion to extend or retract in the first direction; and in the case that the push portion pushes the rod portion to extend out in the first direction, the rod portion can lift the connecting assembly. In this way, the connecting assembly can drive the position adjusting mechanism to be raised in the second direction, so that it is convenient for the moving mechanism to drive the position adjusting mechanism to move in the first direction.

In a possible implementation, a first end of the rod portion is connected to the push portion, a second end of the rod portion is provided with a wedge block, the size of a second end of the wedge block is greater than the size of a first end of the wedge block, and the second end of the wedge block is an end that is of the wedge block and that is close to the push portion in the first direction.

In the foregoing technical solution, through arrangement of the wedge block, the connecting assembly can be lifted relatively gently under the action of the rod portion, so that the position adjusting mechanism can be lifted relatively gently. That is, the position adjusting mechanism can be slowly raised in the second direction.

In a possible implementation, the connecting assembly comprises a shaft and a bearing, a first end of the shaft is connected to the position adjusting mechanism, a second end of the shaft is connected to the bearing, and the bearing is located on a side that is of the moving mechanism and that is away from the position adjusting mechanism.

In the foregoing technical solution, through arrangement of the shaft and the bearing, the bearing rolls on the push rod assembly in the process of the push rod assembly lifting the connecting assembly, which is conducive to reducing the resistance of the push rod assembly lifting the connecting assembly.

In a possible implementation, the position adjusting apparatus comprises a fixing mechanism, and the fixing mechanism comprises a first engaging portion and a second engaging portion, the first engaging portion and the second engaging portion being configured to engage with each other in the case that the position adjusting mechanism moves to the target position.

In the foregoing technical solution, in the case that the position adjusting mechanism moves to the target position, the first engaging portion and the second engaging portion engage with each other. In this way, the position adjusting mechanism can be fixed at the target position to reduce the influence of an impact force on the position adjusting mechanism in the process of parking the vehicle in the position adjusting mechanism, thereby reducing a risk of movement of the position adjusting mechanism.

In a possible implementation, the position adjusting mechanism further comprises end plates disposed at two ends of the position adjusting mechanism in a third direction, and the end plate is provided with the first engaging portion; and the second engaging portion is disposed on the battery swapping platform and is located between the moving mechanism and the end plate. In this way, in the case that the position adjusting mechanism moves to the target position, the position adjusting mechanism can be fixed on the battery swapping platform, thereby reducing the risk of movement of the position adjusting mechanism.

In a possible implementation, the first engaging portion comprises a convex portion protruding in the second direction, the second engaging portion is a rack extending in the first direction, and in the case that the position adjusting mechanism moves to the target position, the convex portion is engaged into a tooth groove of the rack. **In** this way, in the case that the convex portion is engaged into the tooth groove, the first engaging portion and the second engaging portion are engaged with each other, and the position of the position adjusting mechanism in the first direction is fixed.

In a possible implementation, the position adjusting apparatus further comprises a transmission mechanism, and the transmission mechanism is connected to the moving mechanism to drive the moving mechanism to move in the first direction.

In the foregoing technical solution, through arrangement of the transmission mechanism, the moving mechanism can be driven to move in the first direction, thereby driving the position adjusting mechanism to move in the first direction.

In a possible implementation, the transmission mechanism comprises a motor and a chain, and the motor is arranged to drive the chain to rotate; and the moving mechanism comprises an adapter plate, and the adapter plate is fixedly connected to the chain.

In the foregoing technical solution, the motor can drive the chain to rotate, and the chain can drive the adapter plate to move in the first direction, thereby driving the moving mechanism to move in the first direction.

In a possible implementation, the moving mechanism comprises a moving plate, one end of the adapter plate is connected to the moving plate, and the other end of the adapter plate is connected to the chain. In this way, the chain can drive the adapter plate to move in the first direction, and the adapter plate drives the moving plate to move in the first direction.

In a possible implementation, the pitch L6 of the chain and the tooth pitch L5 of the rack in the fixing mechanism in the position adjusting apparatus satisfy: L5 = nL6, wherein n is a positive integer. In this way, a rotation distance of the chain corresponds to a moving distance of the position adjusting mechanism of the position adjusting apparatus, the moving distance of the position adjusting mechanism corresponds to the quantity of tooth grooves of the rack that the position adjusting mechanism passes through. Setting L5 = nL6 is conducive to cooperation between the rack and the convex portion on the position adjusting mechanism.

In a possible implementation, L5 = L6, which is conducive to cooperation between the rack and the convex portion.

In a possible implementation, the position adjusting apparatus further comprises a guide rail, and the guide rail extends in the first direction; and the moving mechanism further comprises a pulley, and the pulley is movable along the guide rail. In this way, the pulley of the moving mechanism moves on the guide rail, which can reduce a risk of deviation of the moving mechanism during movement.

In a possible implementation, the battery swapping area comprises a first recess, and the first recess is configured to accommodate a battery swapping apparatus, so that after the vehicle is parked in the position adjusting mechanism, a battery of the vehicle is swapped by using the battery swapping apparatus accommodated in the first recess. In this way, through arrangement of the first recess, in the case that the battery of the vehicle is swapped, the vehicle does not need to be lifted, which, in one aspect, is conducive to simplifying battery swapping steps; and in the other aspect, the battery swapping platform can be applicable to a vehicle with a relatively large weight.

In a possible implementation, the battery swapping platform further comprises a lap plate, the lap plate is configured to be in communication with two ends of the first recess in the first direction, and the lap plate is movable in the third direction.

In the foregoing technical solution, the lap plate can be in communication with two ends of the first recess in the first direction. In this way, the vehicle can enter the battery swapping platform through the lap plate. The lap plate is movable in the vehicle width direction of the vehicle. In this way, after the vehicle enters the battery swapping platform, the lap plate moves toward two ends of the battery swapping platform in the third direction, so that the battery swapping apparatus moves to a corresponding position of the first recess to perform a battery swapping operation on the vehicle.

In a possible implementation, the position adjusting mechanism comprises a carrier table, and the carrier table is configured to carry and fix a wheel of the vehicle. In this way, after the vehicle enters the battery swapping platform, the vehicle is fixed through the carrier table, so that it is convenient to perform a battery swapping operation on the vehicle.

According to a second aspect, a battery swapping station is provided, comprising the battery swapping platform according to the first aspect and any of the possible implementations in the first aspect.

According to a third aspect, a battery swapping method is provided, comprising: obtaining information about a vehicle; and controlling, based on the information about the vehicle, a position adjusting mechanism in a position adjusting apparatus to move in a first direction relative to a battery swapping area before the vehicle enters a battery swapping platform.

Before the vehicle enters the battery swapping platform, the information about the vehicle is obtained. Before the vehicle enters the battery swapping platform, based on the information about the vehicle, the position adjusting mechanism is controlled to move in the first direction relative to the battery swapping area. In this way, the position adjusting mechanism can correspond to the vehicle, so that it is convenient for the position adjusting mechanism to carry the vehicle. The foregoing solution can be applicable to different types of vehicles. Therefore, the position adjusting mechanism of the position adjusting apparatus can be adjusted based on the information about the vehicle to perform a battery swapping operation on different vehicles.

In a possible implementation, the controlling, based on the information about the vehicle, a position adjusting mechanism in a position adjusting apparatus to move in a first direction relative to a battery swapping area before the vehicle enters a battery swapping platform comprises: controlling a push rod assembly of a moving mechanism to lift the position adjusting mechanism; and controlling, based on the information about the vehicle, the position adjusting mechanism to move in the first direction relative to the battery swapping area after the position adjusting mechanism is lifted. In this way, the position adjusting mechanism is lifted before the position adjusting mechanism moves, and the position adjusting mechanism is not in contact with the floor of the battery swapping platform during movement, which can reduce the influence of sundries on the battery swapping platform on the position adjusting mechanism.

In a possible implementation, the controlling, based on the information about the vehicle, a position adjusting mechanism in a position adjusting apparatus to move in a first direction relative to a battery swapping area before the vehicle enters a battery swapping platform comprises: determining a moving distance of the position adjusting mechanism in the first direction based on the information about the vehicle; and controlling, based on the moving distance, the position adjusting mechanism to move to a target position in the first direction. In this way, the position of the position adjusting mechanism corresponds to the position of the vehicle after entering the battery swapping platform, so that it is convenient to carry the vehicle through the position adjusting mechanism.

In a possible implementation, the information about the vehicle comprises: at least one of wheelbase information of the vehicle, position information of a battery of the vehicle, or distance information between a front wheel and the battery of the vehicle. In this way, it is convenient to adjust the position of the position adjusting mechanism based on the information about the vehicle.

According to a fourth aspect, a battery swapping system is provided, comprising a memory and a processor. The memory is configured to store computer instructions, and the processor is configured to invoke the computer instructions to cause the battery swapping system to implement the method according to the third aspect and any of the possible implementations in the third aspect.

### BRIEF DESCRIPTION OF THE DRAWINGS

In order to more clearly illustrate the technical solutions of the embodiments of the present application, the drawings required to be used in the embodiments of the present application will be briefly introduced below. Apparently, the drawings described below are only some embodiments of the present application. For persons of ordinary skill in the art, other drawings can also be obtained from the drawings without creative work.
FIG. 1 is a schematic diagram of a structure of a battery swapping platform according to an embodiment of the present application;
FIG. 2 is a schematic diagram of a structure of a position adjusting apparatus according to an embodiment of the present application;
FIG. 3 is a schematic diagram after a vehicle enters a battery swapping platform according to an embodiment of the present application;
FIG. 4 is a schematic diagram of a structure of a push rod assembly according to an embodiment of the present application;
FIG. 5 is a schematic diagram of a structure of a fixing mechanism according to an embodiment of the present application;
FIG. 6 is a schematic diagram of a structure of a fixing mechanism according to an embodiment of the present application;
FIG. 7 is a schematic diagram of a partial structure of a chain according to an embodiment of the present application;
FIG. 8 is a schematic diagram of a partial structure of a rack according to an embodiment of the present application;
FIG. 9 is a schematic diagram of a structure of a battery swapping station according to an embodiment of the present application;
FIG. 10 is a schematic diagram of a battery swapping method according to an embodiment of the present application; and
FIG. 11 is a schematic diagram of a battery swapping system according to an embodiment of the present application.

In the drawings, the figures are not drawn to actual scale.

Reference numerals: 100: Battery swapping station; 200: Battery swapping platform; 300: Position adjusting apparatus; 400: Battery swapping area; 410: First recess; 500: Lap plate; 600: Battery swapping apparatus; 310: Position adjusting mechanism; 320: Moving mechanism; 330: Fixing mechanism; 340: Transmission mechanism; 321: Connecting assembly; 322: Push rod assembly; 3221: Push portion; 3222: Rod portion; 3223: Wedge block; 3211: Shaft; 3212: Bearing; 323: Moving plate; 3231: Through hole; 324: Adapter plate; 331: First engaging portion; 332: Second engaging portion; 3311: Convex portion; 3312: Main body portion; 3320: Rack; 3321: Tooth groove; 312: End plate; 342: Motor; 341: Chain; 350: Guide rail; 325: Pulley; 311: Carrier table; 1: Vehicle; 11: Wheel; 111: Front wheel; 112: Middle wheel; 113: Rear wheel; and 12: Battery.

### DETAILED DESCRIPTION OF PREFERRED EMBODIMENTS

The following further describes implementations of the present application in detail with reference to the accompanying drawings and embodiments. The following detailed description of the embodiments and the accompanying drawings are used to describe the principles of the present application by way of example, but are not intended to limit the scope of the present application, that is, the present application is not limited to the described embodiments.

In the description of the present application, it should be noted that, unless otherwise specified, "a plurality of" means two or more. Orientations or positional relationships indicated by the terms "upper", "lower", "left", "right", "inner", "outer", and the like are merely for convenience of description of the present application and simplicity of description, and do not indicate or imply that an apparatus or an element to be referred to must have a specific orientation, or be constructed and operated in a specific orientation, and therefore should not be understood as a limitation on the present application. In addition, terms "first", "second", "third", etc. are used to distinguish between different objects and are not used to describe a specific order or a primary-secondary relationship. "Perpendicular" is not perpendicular in the strict sense, but is within an allowable range of error. "Parallel" is not parallel in the strict sense, but is within an allowable range of error.

The orientation words appearing in the following description are all directions shown in the drawings, and do not limit the specific structure in the present application. In the description of the present application, it should be further noted that, unless explicitly specified and defined otherwise, the terms "mounted", "connected", and "connection" are to be understood in a broad sense. For example, it may be fixed connection, detachable connection, or integral connection; The connection may be a direct connection, or an indirect connection through an intermediary. Those of ordinary skill in the art may understand specific meanings of these terms in the present application according to specific situations.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

With an increase in the quantity of electric vehicles, requirements for the electric vehicles are also becoming increasingly high. In a driving process of an electric vehicle, the battery level gradually decreases. In a current technique, batteries in the vehicle need to be regularly charged by using charging piles, to ensure that the batteries have sufficient power to maintain continuous vehicle operation. However, because a battery capacity is generally large, each charging time may be long, and in the long charging time, a user cannot use the vehicle. Therefore, vehicle use experience of the user is seriously affected. Therefore, battery swapping stations have emerged, which can directly replace batteries with insufficient power in a vehicle with batteries with sufficient power. An entire battery swapping process is quick, significantly saving the time required for battery charging. This does not affect use of the vehicle by a user, thereby greatly improving use experience of the vehicle by the user.

Before swapping a battery of a vehicle, it is necessary to first park the vehicle on a battery swapping platform and use a position adjusting apparatus on the battery swapping platform to carry the vehicle and position the vehicle. However, some position adjusting apparatuses can be applicable to only a single vehicle type, making it difficult to implement compatibility with a plurality of vehicle types, which is disadvantageous for the development and promotion of battery swapping stations.

In view of this, the present application provides a battery swapping platform. The battery swapping platform is provided with a position adjusting apparatus and a battery swapping area. The position adjusting apparatus includes a position adjusting mechanism, and the position adjusting mechanism is movable in a first direction relative to the battery swapping area, so that the position adjusting apparatus can be applicable to a variety of vehicle types, which is conducive to the development and promotion of battery swapping stations.

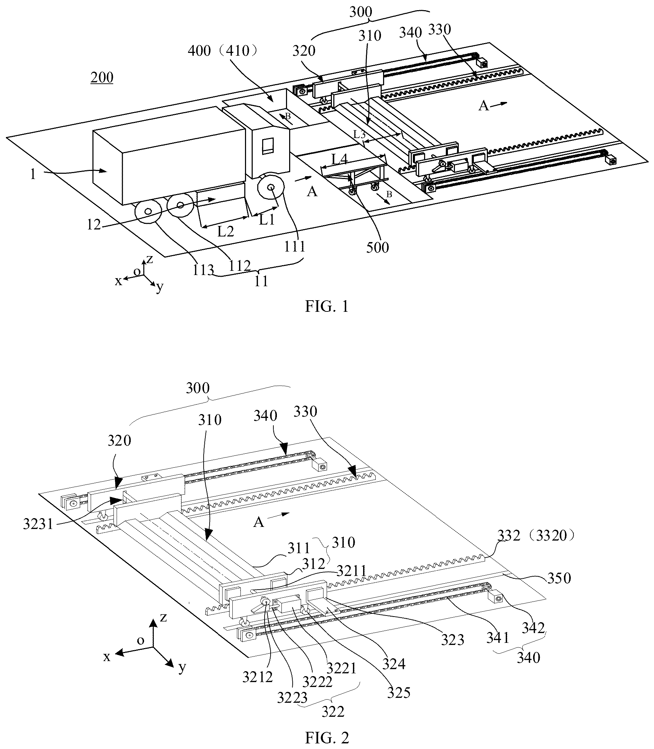

FIG. 1 is a schematic diagram of a structure of a battery swapping platform according to an embodiment of the present application. As shown in FIG. 1, this embodiment of the present application provides a battery swapping platform 200, and the battery swapping platform 200 is provided with a position adjusting apparatus 300 and a battery swapping area 400.

The battery swapping area 400 can provide space in which a battery swapping operation is performed on a vehicle 1. The battery swapping area 400 is a fixed area on the battery swapping platform 200, that is, for all vehicles 1, battery swapping operations on the vehicles 1 (that is, batteries 12 of the vehicles 1 are swapped) are performed in the battery swapping area 400. For example, the battery swapping area 400 is provided with a battery swapping apparatus for swapping the battery 12 of the vehicle 1.

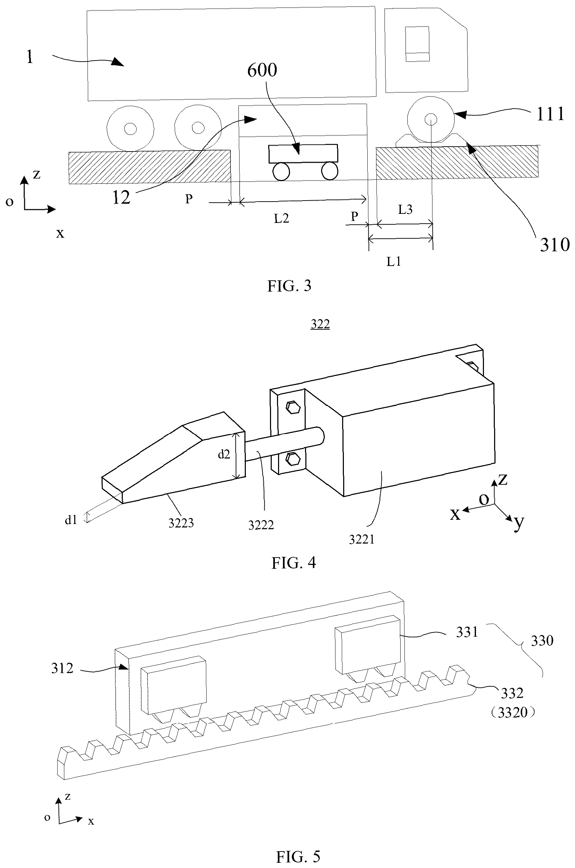

FIG. 2 is a schematic diagram of a structure of a position adjusting apparatus according to an embodiment of the present application, and FIG. 3 is a schematic diagram after a vehicle enters a battery swapping platform according to an embodiment of the present application. As shown in FIG. 1 to FIG. 3, the position adjusting apparatus 300 includes a position adjusting mechanism 310, and the position adjusting mechanism 310 is arranged to be movable in a first direction relative to the battery swapping area 400. The first direction may be the vehicle length direction of the vehicle 1. For example, as shown in FIG. 1, the first direction is the X direction.

Different types of vehicles 1 may have different vehicle lengths or wheelbases. Correspondingly, there may be different distances between batteries 12 of different types of vehicles 1 and wheels 11 of the vehicles 1. For example, the battery 12 of the vehicle 1 is disposed in a chassis of the vehicle 1, and distances between batteries 12 and front wheels 111 are different for vehicles 1 with different wheelbases. A wheelbase of the vehicle 1 may refer to the distance between a front wheel 111 and a middle wheel 112 or between the front wheel 111 and a rear wheel 113 of the vehicle 1.

The position adjusting mechanism 310 is arranged to be movable in the first direction relative to the battery swapping area 400, so that the position adjusting mechanism 310 can correspond to vehicles 1 with different vehicle lengths or wheelbases. For example, in the case that the wheelbase of the vehicle 1 is relatively long, the position adjusting mechanism 310 can move in the A-A direction in FIG. 1, so that wheels 11 of the vehicle 1 are parked in the position adjusting mechanism 310 after the vehicle 1 enters the battery swapping platform 200. For another example, in the case that the wheelbase of the vehicle 1 is relatively short, the position adjusting mechanism 310 can move in a direction opposite to the A-A direction in FIG. 1.

The position adjusting mechanism 310 is further configured to carry the vehicle 1. As an example, as shown in FIG. 3, after the vehicle 1 enters the battery swapping platform, the position adjusting mechanism 310 is configured to carry the wheel 11 (for example, the front wheel 111) of the vehicle 1. Correspondingly, the position adjusting mechanism 310 is further configured to guide the vehicle 1, that is, the position adjusting mechanism 310 is configured to guide the vehicle 1 to park in the position adjusting mechanism 310.

Optionally, in some embodiments, the position adjusting mechanism 310 can further carry the chassis of the vehicle 1.

This embodiment of the present application provides a battery swapping platform 200, and the battery swapping platform 200 is provided with a position adjusting apparatus 300 and a battery swapping area 400. The battery swapping area 400 can provide space in which a battery swapping operation is performed on a vehicle 1. The position adjusting apparatus 300 includes a position adjusting mechanism 310, and the position adjusting mechanism 310 is arranged to be movable in the first direction relative to the battery swapping area 400. In this way, by adjusting the position of the position adjusting mechanism 310 in the first direction, the position adjusting mechanism 310 can be applicable to vehicles 1 with different vehicle lengths or wheelbases, so as to be compatible with more vehicle types. Therefore, the battery swapping platform 200 in this embodiment of the present application can be compatible with different vehicle types, which is conducive to the development and promotion of battery swapping stations.

In some embodiments, the position adjusting apparatus 300 includes a moving mechanism 320, and the moving mechanism 320 is connected to the position adjusting mechanism 310 and configured to move the position adjusting mechanism 310 to a target position in the first direction.

The target position may refer to the position of the wheel 11 (specifically, the front wheel 111) of the vehicle 1 after the vehicle 1 enters the battery swapping platform 200. The position of the wheel 11 corresponds to the position of the position adjusting mechanism 310, so that the position adjusting mechanism 310 carries the wheel 11 of the vehicle 1.

The vehicle 1 may have two or more pairs of wheels depending on the vehicle type of the vehicle 1. For a medium-large vehicle 1, the vehicle 1 may have three pairs of wheels, that is, front wheels 111, middle wheels 112, and rear wheels 113. After the vehicle 1 enters the battery swapping platform 200, the battery swapping area 400 may be located between the front wheels 111 and the middle wheels 112.

In the foregoing embodiment, the moving mechanism 320 can drive the position adjusting mechanism 310 to move in the first direction, so that the position adjusting mechanism 310 can move to the target position. After the position adjusting mechanism 310 moves to the target position, the vehicle 1 can enter the battery swapping platform 200, and then the vehicle 1 is parked in the position adjusting mechanism 310. Through arrangement of the moving mechanism 320, movement of the position adjusting mechanism 310 in the first direction is implemented.

In some embodiments, the moving mechanism 320 includes a connecting assembly 321 and a push rod assembly 322. A first end of the connecting assembly 321 is connected to the position adjusting mechanism 310, and a second end of the connecting assembly 321 is connected to the push rod assembly 322. The push rod assembly 322 is arranged to be capable of extending out in the first direction to lift the connecting assembly 321, so that the position adjusting mechanism 310 is raised in a second direction. The second direction is the vehicle height direction of the vehicle 1.

As shown in FIG. 1 to FIG. 3, the second direction is the Z direction in the figures.

The first end of the connecting assembly 321 is one end of the connecting assembly 321 in a third direction. The second end of the connecting assembly 322 is the other end of the connecting assembly 321 in the third direction. The third direction may be the vehicle width direction of the vehicle 1, for example, the y direction shown in FIG. 1 and FIG. 2.

In the foregoing embodiment, two ends of the connecting assembly 321 are respectively connected to the position adjusting mechanism 310 and the push rod assembly 322, and the push rod assembly 322 lifts the connecting assembly 321 after extending out in the first direction. In this way, the connecting assembly 321 can drive the position adjusting mechanism 310 to be raised in the second direction. After the position adjusting mechanism 310 is raised, it is convenient for the moving mechanism 320 to drive the position adjusting mechanism 310 to move in the first direction, and the influence of sundries on the battery swapping platform 200 on the movement of the position adjusting mechanism 310 can be reduced.

FIG. 4 is a schematic diagram of a structure of a push rod assembly according to an embodiment of the present application. In some embodiments, as shown in FIG. 4, the push rod assembly 322 includes a push portion 3221 and a rod portion 3222, and the push portion 3221 is configured to drive the rod portion 3222 to extend or retract in the first direction; and the rod portion 3222 is connected to the push portion 3221, and the rod portion 3222 is arranged to be capable of extending out in the first direction under the driving of the push portion 3221 to lift the connecting assembly 321.

The push rod assembly 322 may be pushed in a pneumatic or hydraulic manner. This embodiment of the present application includes but is not limited thereto.

Optionally, the rod portion 3222 is a rod extending in the first direction.

The push portion 3221, as a power portion of the push rod assembly 322, can drive the rod portion 3222 to extend or retract in the first direction. In the case that the push portion 3221 drives the rod portion 3222 to extend out in the first direction, the connecting assembly 321 is lifted by using the rod portion 3222; and In the case that the push portion 3221 drives the rod portion 3222 to retract in the first direction, the connecting assembly 321 falls in the second direction.

In the foregoing embodiment, the push portion 3221 is connected to the rod portion 3222, the push portion 3221 can drive the rod portion 3222 to extend or retract in the first direction; and in the case that the push portion 3221 pushes the rod portion 3222 to extend out in the first direction, the rod portion 3222 can lift the connecting assembly 321. In this way, the connecting assembly 321 can drive the position adjusting mechanism 310 to be raised in the second direction, so that it is convenient for the moving mechanism 320 to drive the position adjusting mechanism 310 to move in the first direction.

In some embodiments, as shown in FIG. 4, a first end of the rod portion 3222 is connected to the push portion 3221, a second end of the rod portion 3222 is provided with a wedge block 3223, the size d2 of a second end of the wedge block 3223 is greater than the size d1 of a first end of the wedge block 3223, and the second end of the wedge block 3223 is an end that is of the wedge block 3223 and that is close to the push portion 3221.

The size d1 of the first end of the wedge block 3223 is the maximum size of the wedge block 3223 at the first end in the second direction. The size d2 of the second end of the wedge block 3223 is the maximum size of the wedge block 3223 at the second end in the second direction.

The first end of the wedge block 3223 is an end that is of the wedge block 3223 and that is away from the rod portion 3222 in the first direction, and the second end of the wedge block 3223 is an end that is of the wedge block 3223 and that is close to the push portion 3221 in the first direction.

A cross-section of the wedge block 3223 is trapezoidal, specifically a right trapezoid.

In the foregoing embodiment, through arrangement of the wedge block 3223, the connecting assembly 321 can be lifted relatively gently under the action of the rod portion 3222, so that the position adjusting mechanism 310 can be lifted relatively gently. That is, the position adjusting mechanism 310 can be slowly raised in the second direction.

In some embodiments, the connecting assembly 321 includes a shaft 3211 and a bearing 3212, a first end of the shaft 3211 is connected to the position adjusting mechanism 310, a second end of the shaft 3211 is connected to the bearing 3212, and the bearing 3212 is located on a side that is of the moving mechanism 320 and that is away from the position adjusting mechanism 310.

The shaft 3211 extends in the third direction, and the third direction is the vehicle width direction of the vehicle 1.

In the case that the second end of the rod portion 3222 is provided with the wedge block 3223, the push portion 3221 pushes the rod portion 3222 to extend out in the first direction, the bearing 3212 rolls from the first end of the wedge block 3223 to the second end of the wedge block 3223, and rolling of the bearing 3212 simultaneously drives the shaft 3211 to be raised in the second direction, and then the shaft 3211 drives the position adjusting mechanism 310 to be raised in the second direction. Therefore, arrangement of the wedge block 3223 facilitates the rolling of the bearing 3212 on the wedge block 3223, thereby facilitating the bearing 3212 to drive the shaft 3211 to rise in the second direction, and further facilitating the shaft 3211 to drive the position adjusting mechanism 310 to rise in the second direction.

In the foregoing embodiments, through arrangement of the shaft 3211 and the bearing 3212, the bearing 3212 rolls on the push rod assembly 322 in the process of the push rod assembly 322 lifting the connecting assembly 321, which is conducive to reducing the resistance of the push rod assembly 322 lifting the connecting assembly 321.

Optionally, the connecting assembly 321 is a cylindrical shaft extending in the third direction.

Optionally, the moving mechanism 320 includes a lead screw and a driving apparatus. For example, one end of the lead screw is connected to the position adjusting mechanism 310, and the other end of the lead screw is connected to the driving apparatus. The driving apparatus drives the lead screw to move, and the lead screw drives the position adjusting apparatus 310 to move.

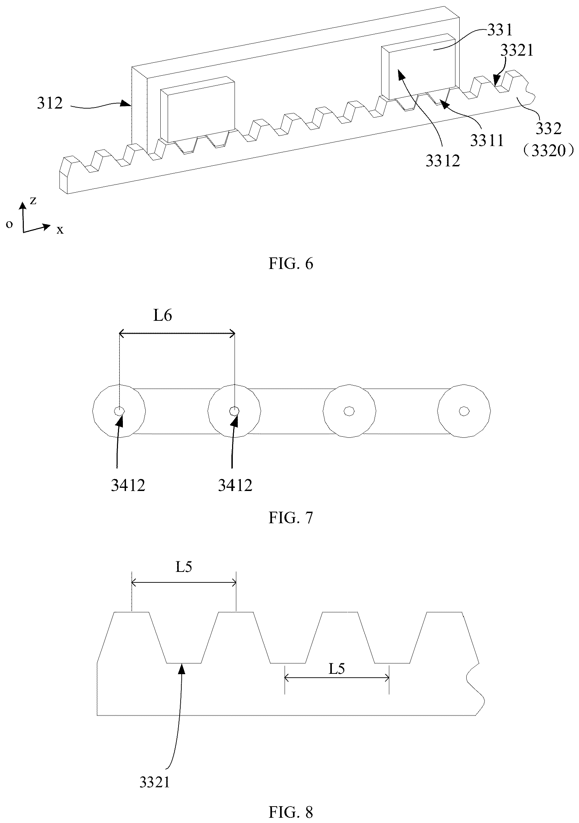

FIG. 5 is a schematic diagram of a structure of a fixing mechanism according to an embodiment of the present application, and FIG. 6 is a schematic diagram of a structure of a fixing mechanism according to an embodiment of the present application. In some embodiments, as shown in FIG. 5 and FIG. 6, the position adjusting apparatus 300 includes a fixing mechanism 330, and the fixing mechanism 330 includes a first engaging portion 331 and a second engaging portion 332. The first engaging portion 331 and the second engaging portion 332 are configured to engage with each other in the case that the position adjusting mechanism 310 moves to the target position.

In the foregoing technical solution, in the case that the position adjusting mechanism 310 moves to the target position, the first engaging portion 331 and the second engaging portion 332 engage with each other. In this way, the position adjusting mechanism 310 can be fixed at the target position to reduce the influence of an impact force on the position adjusting mechanism 310 in the process of parking the vehicle 1 in the position adjusting mechanism 310, thereby reducing a risk of movement of the position adjusting mechanism 310.

In some embodiments, the position adjusting mechanism 310 further includes end plates 312 disposed at two ends of the position adjusting mechanism 310 in the third direction, and the end plate 312 is provided with the first engaging portion 331; and the second engaging portion 332 is disposed on the battery swapping platform 200 and is located between the moving mechanism 320 and the end plate 312.

That the second engaging portion 332 is located between the moving mechanism 320 and the end plate 312 may be that the second engaging portion 332 is located between the moving mechanism 320 and the end plate 312 in the third direction. In this way, the first engaging portion 331 is closer to the second engaging portion 332 than the moving mechanism 320, which facilitates engagement between the first engaging portion 331 and the second engaging portion 332.

In the foregoing embodiments, through cooperation between the first engaging portion 331 on the end plate 312 and the second engaging portion 332 on the battery swapping platform 200, the position adjusting mechanism 310 can be fixed to the battery swapping platform 200 in the case that the position adjusting mechanism 310 moves to the target position, thereby reducing the risk of movement of the position adjusting mechanism 310.

In some embodiments, as shown in FIG. 6, the first engaging portion 331 includes a convex portion 3311 protruding in the second direction, the second engaging portion 332 is a rack 3320 extending in the first direction, and in the case that the position adjusting mechanism 310 moves to the target position, the convex portion 3311 is engaged into a tooth groove 3321 of the rack 3320.

The first engaging portion 331 includes a main body portion 3312 and a convex portion 3311, and the convex portion 3311 extends from the main body portion 3312 and protrudes beyond the main body portion 3312 in the second direction.

In the case that the moving mechanism 320 drives the position adjusting mechanism 31 to move to the target position, the push rod assembly 322 retracts in the first direction, the connecting assembly 321 falls in the second direction and drives the position adjusting mechanism 310 to fall in the second direction, and after the position adjusting mechanism 310 falls, the convex portion 3311 is engaged into the tooth groove 3321 of the rack 3320.

In the foregoing embodiments, in the case that the convex portion 3311 is engaged into the tooth groove 3321, the first engaging portion 331 and the second engaging portion 332 are engaged with each other, and the position of the position adjusting mechanism 310 in the first direction is fixed.

Optionally, the second engaging portion 332 is a plate having a concave portion and extending in the first direction, and the first engaging portion 331 may be engaged into the concave portion. Optionally, the first engaging portion 332 has a concave portion, the second engaging portion 332 is a plate having a protrusion and extending in the first direction, and the concave portion may be engaged with the protrusion. It should be noted that the first engaging portion 331 and the second engaging portion 332 in the embodiments of the present application include but are not limited thereto.

In some embodiments, the position adjusting apparatus 300 further includes a transmission mechanism 340, and the transmission mechanism 340 is connected to the moving mechanism 320 to drive the moving mechanism 320 to move in the first direction.

In the foregoing embodiments, through arrangement of the transmission mechanism 340, the moving mechanism 320 can be driven to move in the first direction, thereby driving the position adjusting mechanism 310 to move in the first direction.

In some embodiments, the transmission mechanism 340 includes a motor 342 and a chain 341, and the motor 342 is arranged to drive the chain 341 to rotate; and the moving mechanism 320 includes an adapter plate 324, and the adapter plate 324 is fixedly connected to the chain 341.

The adapter plate 324 includes a first portion and a second portion (not shown in the figure), the first portion is connected to the moving mechanism 320, and the second portion is connected to the first portion and bent at a position connected to the first portion. In this way, the second portion is fixedly connected to the chain 341. Through arrangement of the adapter plate 324, the connection between the moving mechanism 320 and the chain 341 can be realized, so that the chain 341 can drive the moving mechanism 320 to move in the first direction.

Optionally, the adapter plate 324 is fixedly connected to the chain 341 through a bolt.

In the foregoing embodiments, the motor 342 can drive the chain 341 to rotate, and the chain 341 can drive the adapter plate 324 to move in the first direction, thereby driving the moving mechanism 320 to move in the first direction.

In some embodiments, the moving mechanism 320 includes a moving plate 323, one end of the adapter plate 324 is connected to the moving plate 323, and the other end of the adapter plate 324 is connected to the chain 341. In this way, the chain 341 can drive the adapter plate 324 to move in the first direction, and the adapter plate 324 drives the moving plate 323 to move in the first direction.

Optionally, the push rod assembly 322 is disposed on the moving plate 323. In this way, the moving plate 323 moves in the first direction, and the push rod assembly 322 moves in the first direction along with the moving plate 323.

Optionally, the moving plate 323 is provided with a through hole 3231, and the position of the through hole 3231 corresponds to the bearing 3212. The through hole 3231 may be a hole extending in the second direction, for example, a rectangular hole. In this way, space can be provided for movement of the shaft 3211 in the second direction.

FIG. 7 is a schematic diagram of a partial structure of a chain according to an embodiment of the present application; and FIG. 8 is a schematic diagram of a partial structure of a rack according to an embodiment of the present application. In some embodiments, as shown in FIG. 7 and FIG. 8, the pitch L6 of the chain 341 and the tooth pitch L5 of the rack 3320 in the fixing mechanism 330 in the position adjusting apparatus 300 satisfy: L5 = nL6, where n is a positive integer. For example, n is 1, 2, 5, or any other positive integer.

The pitch L6 of the chain 341 is the distance between adjacent rollers 3412 of the chain 341.

The pitch L5 of the rack 3320 is the distance between centers of adjacent tooth grooves 3321.

In the foregoing embodiments, a rotation distance of the chain 341 corresponds to a moving distance of the position adjusting mechanism 310 of the position adjusting apparatus 300, the moving distance of the position adjusting mechanism 310 corresponds to the quantity of tooth grooves 3321 of the rack 3320 that the position adjusting mechanism 310 passes through. Setting L5 = nL6 is conducive to cooperation between the rack 3320 and the convex portion 3311 on the position adjusting mechanism 310.

In some embodiments, L5 = L6, which is conducive to cooperation between the rack 3320 and the convex portion 3311.

In some embodiments, the position adjusting apparatus 300 further includes a guide rail 350, and the guide rail 350 extends in the first direction; and the moving mechanism 320 further includes a pulley 325, and the pulley 325 is movable along the guide rail 350. In this way, the pulley 325 of the moving mechanism 320 moves on the guide rail 350, which can reduce a risk of deviation of the moving mechanism 320 during movement.

Optionally, the pulley 325 is disposed at an end that is of the moving plate 323 and that is close to the battery swapping platform 200 in the second direction.

In some embodiments, the battery swapping area 400 includes a first recess 410, and the first recess 410 is configured to accommodate a battery swapping apparatus 600, so that after a vehicle 1 is parked in the position adjusting mechanism 310, a battery 12 of the vehicle 1 is swapped by using the battery swapping apparatus 600 accommodated in the first recess 410.

Optionally, the battery swapping apparatus 600 is movable, and can carry a fully-charged battery to move to the first recess 410 and swap the battery 12 (which may also be referred to as a depleted battery) of the vehicle 1 with the fully-charged battery. As an example, in the case that the vehicle 1 is parked in the position adjusting mechanism 310 after entering the battery swapping platform 200, the battery swapping apparatus 600 moves to the position of the first recess 410 corresponding to the battery 12 of the vehicle 1, and the battery 12 of the vehicle 1 is swapped.

Optionally, the battery swapping apparatus 600 includes a mechanical claw, and the mechanical claw is configured to swap the battery 12.

Optionally, the battery 12 of the vehicle 1 is located in the chassis of the vehicle 1.

Through arrangement of the first recess 410, the battery swapping apparatus 600 can perform a relevant operation of battery swapping in the first recess 410. That is, the battery swapping operation can be performed on the vehicle 1 without lifting the vehicle 1. In this way, it is not only applicable to the vehicle 1 with a relatively large weight, but also battery swapping steps can be simplified.

Optionally, the vehicle 1 is a logistics vehicle, and more specifically, the vehicle 1 is a heavy truck. The battery swapping platform 200 in the embodiments of the present application can be applicable to the vehicle 1 of the foregoing type, but is not limited to the vehicle 1 of the foregoing type. For example, the vehicle 1 may be a passenger vehicle.

In some embodiments, the battery swapping platform 200 further includes a lap plate 500, the lap plate 500 is configured to be in communication with two ends of the first recess 410 in the first direction, and the lap plate 500 is movable in the third direction. The third direction is the vehicle width direction of the vehicle 1.

In the foregoing embodiment, the lap plate 500 is in communication with two ends of the first recess 410 in the first direction. In this way, the vehicle 1 can enter the battery swapping platform 200 through the lap plate 500. The lap plate 500 is movable in the vehicle width direction of the vehicle 1. In this way, after the vehicle 1 enters the battery swapping platform 200, the lap plate 500 moves toward two ends of the battery swapping platform 200 in the third direction (for example, moves in the B-B direction), so that the battery swapping apparatus 600 moves to a corresponding position of the first recess 410 to perform a battery swapping operation on the vehicle 1.

In some embodiments, the position adjusting mechanism 310 includes a carrier table 311, and the carrier table 311 is configured to carry and fix a wheel of the vehicle 1. In this way, after the vehicle 1 enters the battery swapping platform 200, the vehicle 1 is fixed through the carrier table 311, so that it is convenient to perform a battery swapping operation on the vehicle 1.

Optionally, the carrier table 311 extends in the third direction.

An embodiment of the present application provides a battery swapping station, including the battery swapping platform 200 in any of the foregoing embodiments.

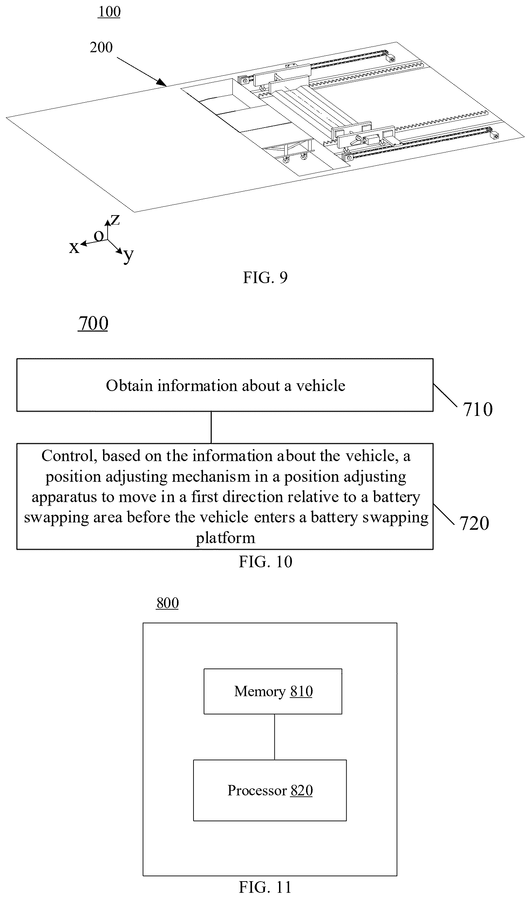

FIG. 9 is a schematic diagram of a structure of a battery swapping station according to an embodiment of the present application. The battery swapping station 100 may include a battery rack (not shown in the figure). The battery rack may be configured with a plurality of batteries. The battery rack may include a battery charging compartment and a battery buffering apparatus. The batteries may be stored in the battery charging compartment, so that the batteries can be charged. The battery buffering apparatus may be configured to temporarily store a depleted battery swapped from a vehicle.

In addition to the battery rack, the battery swapping station 100 may further include a palletizer and a battery swapping apparatus (not shown in the figure). The battery swapping apparatus may transport the depleted battery swapped from the vehicle 1 to the battery buffering apparatus, and the palletizer transports the depleted battery in the battery buffering apparatus to the battery rack, so that the battery rack charges the depleted battery. In addition, the palletizer may transport fully-charged batteries on the battery rack to the movable battery swapping apparatus, and the movable battery swapping apparatus carries a fully-charged battery to a vehicle 1, and mounts the fully-charged battery in the vehicle 1.

Optionally, a locking mechanism is provided in the chassis of the vehicle 1, a locking portion corresponding to the locking mechanism is provided in the battery, the locking mechanism may be configured to lock the locking portion, so that the battery can be locked and mounted in the chassis of the vehicle 1. Correspondingly, the locking structure may also be configured to unlock the locking portion, so that the battery can be unlocked and removed from the chassis of the vehicle 1. In a process of removing and mounting the battery by the movable battery swapping apparatus, the movable battery swapping apparatus may push the battery upward, to implement unlocking and locking between the locking portion in the battery and the locking mechanism in the vehicle 1, thereby completing removal and mounting of the battery.

The technical solutions for the battery swapping platform and the battery swapping station have been described above with reference to FIG. 1 to FIG. 9. A battery swapping method is described below with reference to FIG. 10, where reference may be made to the above for parts corresponding to the battery swapping platform and the battery swapping station, and details are not described here again.

FIG. 10 is a schematic diagram of a battery swapping method according to an embodiment of the present application. The present application provides a battery swapping method, and as shown in FIG. 10, the battery swapping method 700 includes the following steps.

Step 710: obtaining information about a vehicle 1.

Step 720: controlling, based on the information about the vehicle 1, a position adjusting mechanism 310 in a position adjusting apparatus 300 to move in a first direction relative to a battery swapping area 400 before the vehicle 1 enters a battery swapping platform 200.

Before the vehicle 1 enters the battery swapping platform 200, the position adjusting apparatus 300 is adjusted based on the information about the vehicle 1, so that the position of the position adjusting mechanism 310 can correspond to the vehicle 1, which is convenient for the position adjusting mechanism 310 to carry the vehicle 1.

The battery swapping method 700 in this embodiment of the present application is applicable to the battery swapping station 100 or the battery swapping platform 200 in any of the foregoing embodiments.

The solution in this embodiment of the present application can be applicable to different types of vehicles 1. Therefore, the position adjusting apparatus 300 can be adjusted based on the information about the vehicle 1 to perform a battery swapping operation on different vehicles 1.

In some embodiments, the controlling, based on the information about the vehicle 1, a position adjusting mechanism 310 in a position adjusting apparatus 300 to move in a first direction relative to a battery swapping area 400 before the vehicle 1 enters a battery swapping platform 200 includes: controlling a push rod assembly 322 of a moving mechanism 320 to lift the position adjusting mechanism 310; and controlling, based on the information about the vehicle 1, the position adjusting mechanism 310 to move in the first direction relative to the battery swapping area 400 after the position adjusting mechanism 310 is lifted. In this way, the position adjusting mechanism 310 is lifted before the position adjusting mechanism 310 moves, and the position adjusting mechanism 310 is not in contact with the floor of the battery swapping platform 200 during movement, which can reduce the influence of sundries on the battery swapping platform 200 on the position adjusting mechanism 310.

In some embodiments, the controlling, based on the information about the vehicle 1, a position adjusting mechanism 310 in a position adjusting apparatus 300 to move in a first direction relative to a battery swapping area 400 before the vehicle 1 enters a battery swapping platform 200 includes: determining a moving distance of the position adjusting mechanism 310 in the first direction based on the information about the vehicle 1; and controlling, based on the moving distance, the position adjusting mechanism 310 to move to a target position in the first direction. In this way, the position of the position adjusting mechanism 310 corresponds to the position of the vehicle 1 after entering the battery swapping platform 200, so that it is convenient to carry the vehicle 1 through the position adjusting mechanism 310.

In some embodiments, the information about the vehicle 1 includes: at least one of wheelbase information of the vehicle 1, position information of a battery 12 of the vehicle 1, or distance information between a front wheel 111 and the battery 12 of the vehicle 1. In this way, it is convenient to adjust the position of the position adjusting mechanism 310 based on the information about the vehicle 1.

As an example, the information about the vehicle 1 includes: the distance L1 between the center of the front wheel 111 of the vehicle 1 and an end that is of the battery 12 and that is close to the front wheel 111.

In an embodiment of the present application, the battery swapping method 700 is specifically as follows.

Before the vehicle 1 enters the battery swapping platform 200, the information about the vehicle 1 is obtained, specifically, the distance L1 is obtained.

Before the vehicle 1 enters the battery swapping platform 200, the position of the position adjusting mechanism 310 on the battery swapping platform 200 is adjusted based on the distance L1.

As shown in FIG. 3, the distance between the center of the carrier table 311 of the position adjusting mechanism 310 and the first recess 410 is L3, L3 = L1 - P, and P is a safe operation gap. Specifically, L3 is determined based on L1 and P, so that the position adjusting mechanism 310 is controlled to move in the first direction based on L3. More specifically, the push rod assembly 322 extends out in the first direction, so as to lift the position adjusting mechanism 310 through the connecting assembly 321. Then, the moving mechanism 320 drives the position adjusting mechanism 310 to move to a position corresponding to L3. The push rod assembly 322 retracts in the first direction, the position adjusting mechanism 310 falls, and the first engaging portion 331 is engaged with the second engaging portion 332 to fix the position adjusting mechanism 310.

Before the vehicle 1 enters the battery swapping platform 200, the lap plate 500 is controlled to move, so that the lap plate 500 is in communication with two ends of the first recess 410.

The position of the lap plate 500 after movement corresponds to the position of the position adjusting mechanism 310 in the first direction. In this way, the vehicle 1 can enter the battery swapping platform 200 through the lap plate 500, and then be parked in the position adjusting mechanism 310.

After the vehicle 1 enters the battery swapping platform 200, the battery swapping apparatus 600 is controlled to move to the first recess 410, and the battery swapping apparatus 600 is controlled to swap the battery 12 of the vehicle 1.

The battery swapping method 700 in this embodiment of the present application can be performed by a control system of the battery swapping station.

FIG. 11 is a schematic diagram of a battery swapping system according to an embodiment of the present application. As shown in FIG. 11, an embodiment of the present application provides a battery swapping system 800, including a memory 810 and a processor 820. The memory 810 is configured to store computer instructions, and the processor 820 is configured to invoke the computer instructions to cause the battery swapping system 800 to implement the method in any of the foregoing embodiments.

Although the present application has been described with reference to some preferred embodiments, various modifications to this application and replacements of the components therein with equivalents can be made without departing from the scope of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery swapping platform, wherein the battery swapping platform (200) is provided with a position adjusting apparatus (300) and a battery swapping area (400), wherein
the position adjusting apparatus (300) comprises a position adjusting mechanism (310), and the position adjusting mechanism (310) is arranged to be movable in a first direction relative to the battery swapping area (400).

2. The battery swapping platform according to claim 1, wherein the position adjusting apparatus (300) comprises a moving mechanism (320), and the moving mechanism (320) is connected to the position adjusting mechanism (310) and configured to move the position adjusting mechanism (310) to a target position in the first direction.

3. The battery swapping platform according to claim 2, wherein the moving mechanism (320) comprises a connecting assembly (321) and a push rod assembly (322), wherein
a first end of the connecting assembly (321) is connected to the position adjusting mechanism (310), and a second end of the connecting assembly (321) is connected to the push rod assembly (322); and
the push rod assembly (322) is arranged to be capable of extending out in the first direction to lift the connecting assembly (321), so that the position adjusting mechanism (310) is raised in a second direction.

4. The battery swapping platform according to claim 3, wherein the push rod assembly (322) comprises a push portion (3221) and a rod portion (3222), wherein
the push portion (3221) is configured to drive the rod portion (3222) to extend or retract in the first direction; and
the rod portion (3222) is connected to the push portion (3221), and the rod portion (3222) is arranged to be capable of extending out in the first direction under the driving of the push portion (3221) to lift the connecting assembly (321).

5. The battery swapping platform according to claim 4, wherein a first end of the rod portion (3222) is connected to the push portion (3221), a second end of the rod portion (3222) is provided with a wedge block (3223), the size (d2) of a second end of the wedge block (3223) is greater than the size (d1) of a first end of the wedge block (3223), and the second end of the wedge block (3223) is an end that is of the wedge block (3223) and that is close to the push portion (3221) in the first direction.

6. The battery swapping platform according to any one of claims 3 to 5, wherein the connecting assembly (321) comprises a shaft (3211) and a bearing (3212), a first end of the shaft (3211) is connected to the position adjusting mechanism (310), a second end of the shaft (3211) is connected to the bearing (3212), and the bearing (3212) is located on a side that is of the moving mechanism (320) and that is away from the position adjusting mechanism (310).

7. The battery swapping platform according to any one of claims 1 to 6, wherein the position adjusting apparatus (300) comprises a fixing mechanism (330), and the fixing mechanism (330) comprises a first engaging portion (331) and a second engaging portion (332), the first engaging portion (331) and the second engaging portion (332) being configured to engage with each other in the case that the position adjusting mechanism (310) moves to the target position.

8. The battery swapping platform according to claim 7, wherein the position adjusting mechanism (310) further comprises end plates (312) disposed at two ends of the position adjusting mechanism (310) in a third direction, and the end plate (312) is provided with the first engaging portion (331); and
the second engaging portion (332) is disposed on the battery swapping platform (200) and is located between the moving mechanism (320) and the end plate (312).

9. The battery swapping platform according to claim 7 or 8, wherein the first engaging portion (331) comprises a convex portion (3311) protruding in the second direction, the second engaging portion (332) is a rack (3320) extending in the first direction, and in the case that the position adjusting mechanism (310) moves to the target position, the convex portion (3311) is engaged into a tooth groove (3321) of the rack (3320).

10. The battery swapping platform according to any one of claims 2 to 9, wherein the position adjusting apparatus (300) further comprises a transmission mechanism (340), and the transmission mechanism (340) is connected to the moving mechanism (320) to drive the moving mechanism (320) to move in the first direction.

11. The battery swapping platform according to claim 10, wherein the transmission mechanism (340) comprises a motor (342) and a chain (341), and the motor (342) is arranged to drive the chain (341) to rotate; and
the moving mechanism (320) comprises an adapter plate (324), and the adapter plate (324) is fixedly connected to the chain (341).

12. The battery swapping platform according to claim 11, wherein the moving mechanism (320) comprises a moving plate (323), one end of the adapter plate (324) is connected to the moving plate (323), and the other end of the adapter plate (324) is connected to the chain (341).

13. The battery swapping platform according to claim 11 or 12, wherein the pitch L6 of the chain (341) and the tooth pitch L5 of the rack (3320) in the fixing mechanism (330) in the position adjusting apparatus (300) satisfy: L5 = nL6, wherein n is a positive integer.

14. The battery swapping platform according to claim 13, wherein L5 = L6.

15. The battery swapping platform according to any one of claims 2 to 14, wherein the position adjusting apparatus (300) further comprises a guide rail (350), and the guide rail (350) extends in the first direction; and
the moving mechanism (320) further comprises a pulley (325), and the pulley (325) is movable along the guide rail (350).

16. The battery swapping platform according to any one of claims 1 to 15, wherein the battery swapping area (400) comprises a first recess (410), and the first recess (410) is configured to accommodate a battery swapping apparatus (600), so that after a vehicle (1) is parked in the position adjusting mechanism (310), a battery (12) of the vehicle (1) is swapped by using the battery swapping apparatus (600) accommodated in the first recess (410).

17. The battery swapping platform according to claim 16, wherein the battery swapping platform (200) further comprises a lap plate (500), the lap plate (500) is configured to be in communication with two ends of the first recess (410) in the first direction, and the lap plate (500) is movable in the third direction.

18. The battery swapping platform according to any one of claims 1 to 17, wherein the position adjusting mechanism (310) comprises a carrier table (311), and the carrier table (311) is configured to carry and fix a wheel of the vehicle (1).

19. A battery swapping station, comprising the battery swapping platform (200) according to any one of claims 1 to 18.

20. A battery swapping method, comprising:
obtaining information about a vehicle (1); and
controlling, based on the information about the vehicle (1), a position adjusting mechanism (310) in a position adjusting apparatus (300) to move in a first direction relative to a battery swapping area (400) before the vehicle (1) enters a battery swapping platform.

21. The battery swapping method according to claim 20, wherein the controlling, based on the information about the vehicle (1), a position adjusting mechanism (310) in a position adjusting apparatus (300) to move in a first direction relative to a battery swapping area (400) before the vehicle (1) enters a battery swapping platform comprises:
controlling a push rod assembly (322) of a moving mechanism (320) to lift the position adjusting mechanism (310); and
controlling, based on the information about the vehicle (1), the position adjusting mechanism (310) to move in the first direction relative to the battery swapping area (400) after the position adjusting mechanism (310) is lifted.

22. The battery swapping method according to claim 20 or 21, wherein the controlling, based on the information about the vehicle (1), a position adjusting mechanism (310) in a position adjusting apparatus (300) to move in a first direction relative to a battery swapping area (400) before the vehicle (1) enters a battery swapping platform comprises:
determining a moving distance of the position adjusting mechanism (310) in the first direction based on the information about the vehicle (1); and
controlling, based on the moving distance, the position adjusting mechanism (310) to move to a target position in the first direction.

23. The battery swapping method according to any one of claims 20 to 22, wherein the information about the vehicle (1) comprises: at least one of wheelbase information of the vehicle (1), position information of a battery (12) of the vehicle (1), or distance information between a front wheel (111) and the battery (12) of the vehicle (1).

24. A battery swapping system, comprising a memory and a processor, wherein the memory is configured to store computer instructions, and the processor is configured to invoke the computer instructions to cause the battery swapping system to implement the method according to any one of claims 20 to 23.
